# EUROPEAN PATENT APPLICATION

(11) **EP 4 810 325 A1**
(43) Date of publication of application: **23.09.2026**
(21) Application number: 24890559.8
(22) Date of filing: 07.11.2024
(51) Int. Cl.: B60R 13/02, B32B 21/14, B32B 21/08, B32B 33/00

(54) **REAL WOOD TRIM AND METHOD FOR MANUFACTURING REAL WOOD TRIM**

(30) Priority: 14.11.2023 CN 202323069047 U
(71) Applicant: Yanfeng International Automotive Technology Co., Ltd., Shanghai 201306 (CN)
(72) Inventor: YU, Sihan, Shanghai 201306 (CN); YAN, Tianfu, Shanghai 201306 (CN); GAO, Qi, Shanghai 201306 (CN); DENG, Leilei, Shanghai 201306 (CN); ZHAO, Ping, Shanghai 201306 (CN)
(74) Representative: Trinks, Ole
(86) International application number: PCT/CN2024/130474
(87) International publication number: WO 2025/103202

(57) **Abstract**

The present application relates to a real wood trim comprising a base layer, a wood veneer layer, and a paint layer arranged from bottom to top, wherein the real wood trim further comprises a metallic luster layer, which is either a pad-printed ink layer or a PVD coating layer. According to the real wood trim of the present application, various metallic appearance effects are embodied by the pad-printed ink layer or the PVD coating layer, whereby a metallic color coating treatment technology and the real wood trim can be combined and applied in automotive interior and exterior trim parts. Without using real metal materials, an appearance effect of embedding various metallic colors can be achieved at a lower material cost. In addition, the present application also relates to a method for manufacturing a real wood trim.

## Description

This application is based on and claims the priority of Chinese patent application No. 202323069047.7, filed on November 14, 2023; the disclosure of that Chinese patent application is incorporated herein in its entirety.

### TECHNICAL FIELD

The present application relates to automotive interior and exterior trim parts, and more particularly to a real wood trim. The present application further relates to a method for manufacturing a real wood trim.

### BACKGROUND OF THE INVENTION

Due to the rise of new energy electric vehicles, the automotive industry as a whole is currently undergoing rapid development and evolution. Conventional real wood trims can no longer meet the aesthetic requirements of many original equipment manufacturers (OEMs). Currently, innovative trims featuring real wood inlaid with aluminum appearance are often limited to high-end models due to high material and production costs, and cannot be widely used in mid-to-low-end models.

### SUMMARY OF THE INVENTION

The objective of the present application is to provide a real wood trim and a method for manufacturing a real wood trim, capable of overcoming at least one of the shortcomings in the prior art.

To address the issue of high costs associated with real wood inlaid aluminum trims in the prior art, the present application provides a real wood trim and a method for manufacturing such a real wood trim.

A first aspect of the present application relates to a real wood trim comprising, from bottom to top, a base layer, a wood veneer layer, and a paint layer. The real wood trim further comprises a metallic luster layer, which is either a pad-printed ink layer or a PVD coating layer.

Preferably, in some embodiments, the pad-printed ink layer is located above the paint layer.

Preferably, in some embodiments, the base layer comprises an opaque plastic substrate layer and/or a transparent plastic layer.

Preferably, in some embodiments, when the base layer is an opaque plastic substrate layer, the metallic luster layer is located above the base layer.

Preferably, in some embodiments, when the base layer comprises a transparent plastic layer, the metallic luster layer is located above or below the base layer. In particular, the metallic luster layer is located at least partially in the region corresponding to the transparent plastic layer.

Preferably, in some embodiments, the wood veneer layer has a shielding layer.

Preferably, in some embodiments, when the base layer comprises a plastic substrate layer and a transparent plastic layer, the metallic luster layer is located above or below the transparent plastic layer, particularly directly above or directly below.

Preferably, in some embodiments, the transparent plastic layer is located within the plastic substrate layer in the light-transmitting regions.

Preferably, in some embodiments, the wood veneer layer is a conventional wood veneer layer or a translucent wood veneer layer.

Preferably, in some embodiments, when the wood veneer layer is an opaque conventional wood veneer layer, the metallic luster layer is located above the conventional wood veneer layer, or the conventional wood veneer layer has a hollowed-out structure in the light-transmitting region.

The real wood trim of the present application achieves various metallic appearance effects through a pad printed ink layer or a PVD coating layer. By combining metallic color spraying technology with real wood trim for use in automotive interior and exterior trims, it achieves the appearance of inlaid metals at a lower material cost without using actual metal materials. Furthermore, the real wood trim of the present application can also support light-transmitting function, a capability unattainable with conventional inlaid real metal, thereby meeting the demand for automotive interiors with multi-ambient lighting effects.

A second aspect of the present application relates to a method for manufacturing the real wood trim according to the first aspect of the present application. The method comprises:
- providing a base layer on a back side of the wood veneer;
- providing a paint layer on an upper surface of the wood veneer; and
- providing a metallic luster layer by pad printing with ink or PVD coating.

Preferably, in some embodiments, the method comprises:
- performing a first insert molding on the back of the wood veneer layer to provide a plastic substrate layer; and
- performing a second insert molding on the back of the wood veneer layer to provide a transparent plastic layer.

Preferably, in some embodiments:
- performing the first insert molding using non-transparent plastic particles;
   and/or
- performing the second insert molding using transparent plastic particles.

Preferably, in some embodiments, the method comprises: thermoforming the veneer layer as a whole into the desired shape prior to providing the base layer.

Preferably, in some embodiments, the method comprises: laser engraving the veneer layer.

Preferably, in some embodiments, the method comprises: CNC milling the edge of the part after providing the base layer to remove process edges.

Preferably, in some embodiments, the method comprises: sanding the upper surface of the veneer layer before applying the paint layer.

Preferably, in some embodiments, the method comprises:
- cutting the wood veneer layer; and/or
- subjecting the wood veneer layer to a light-shielding treatment.

The technical features mentioned above, those to be mentioned below, and those shown separately in the figures may be combined in any manner, provided that the combined features are not mutually contradictory. All feasible combinations of features constitute the technical content explicitly described herein. Any one of the multiple sub-features included in a single statement may be applied independently and need not necessarily be applied together with the other sub-features.

### BRIEF DESCRIPTION OF THE DRAWINGS

The present application will be described in more detail below with reference to the drawings and by means of exemplary embodiments. The drawings are briefly described as follows:
- Figure 1: is a schematic structural diagram of a real wood trim piece according to a first embodiment of the present application.
- Figure 2: is a schematic structural diagram of a real wood trim piece according to a second embodiment of the present application.
- Figure 3: is a schematic structural diagram of a real wood trim piece according to a third embodiment of the present application.
- Figure 4: is a schematic structural diagram of a real wood trim piece according to a fourth embodiment of the present application.
- Figure 5: is a schematic diagram of the structure of a real wood trim piece according to a fifth embodiment of the present application.
- Figure 6: is a schematic diagram of the structure of a real wood trim piece according to a sixth embodiment of the present application.
- Figure 7: is an exemplary flowchart of a method for manufacturing a real wood trim piece according to the present application.
- Figure 8: is another exemplary flowchart of a method for manufacturing a real wood trim piece according to the present application.
- Figure 9: is yet another exemplary flowchart of a method for manufacturing a real wood trim piece according to the present application.
- Figure 10: is yet another exemplary flowchart of a method for manufacturing a real wood trim piece according to the present application.

### DETAILED DESCRIPTION

Preferred embodiments of the present application are described in detail below with reference to the accompanying drawings. It should be noted that the specific embodiments described below are merely illustrative examples of the technical solutions of the present application and do not limit the scope of protection defined by the claims.

### Embodiment 1

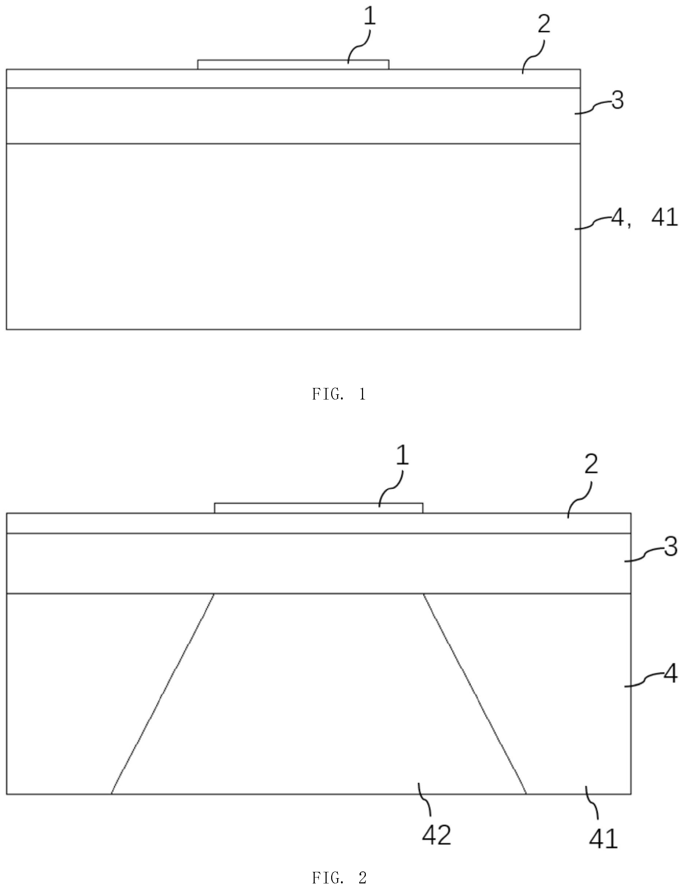

As shown in Figure 1, the real wood trim according to this embodiment may be a base version without light transmission, sequentially comprising, from top to bottom, a metallic luster layer 1, a paint layer 2, a wood veneer layer 3, and a base layer 4. The real wood trim without light transmission may be understood as not having a light-emitting or light-transmitting effect.

In this embodiment, the metallic luster layer 1 may be a pad-printed ink layer capable of producing various metallic appearance effects. The metallic luster layer may also be a PVD coating layer.

In this embodiment, the wood veneer layer 3 is a conventional wood veneer layer. "Conventional wood veneer layer" can be understood as a general wood veneer layer that does not necessarily need to be translucent. Compared to a translucent wood veneer layer, a conventional wood veneer layer is relatively opaque.

In this embodiment, the base layer 4 is a plastic substrate layer 41, which can be used to ensure the structural strength of the entire product. The plastic substrate layer 41 can be opaque-for example, black-thereby also serving as a shielding layer.

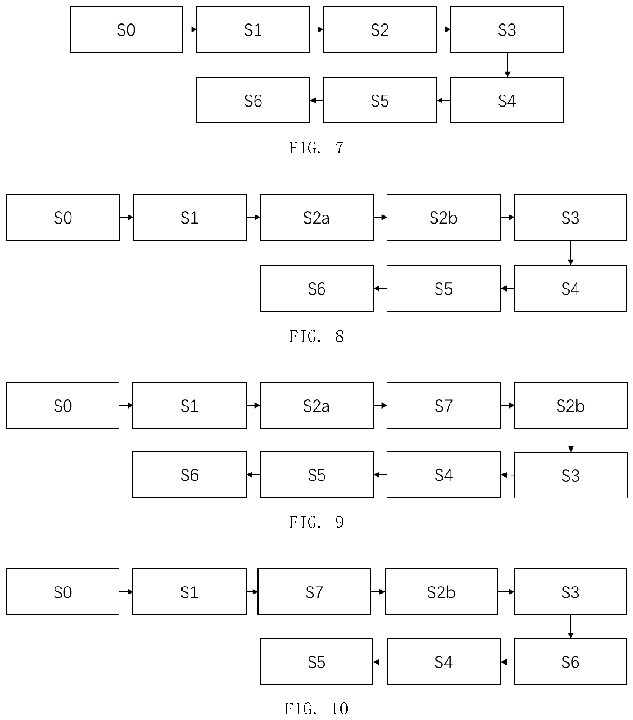

For example, with reference to Figure 7, the specific manufacturing method for the real wood trim of this embodiment may include, for example: step S1, thermoforming the conventional wood veneer layer as a whole into the desired irregular shape to provide the wood veneer layer 3. In step S2, non-transparent plastic particles are injection-molded in a single operation onto the back of the wood veneer layer 3 (the lower surface in Fig. 1) to form the base layer 4. This yields a part consisting of the wood veneer layer 3 and the base layer 4. In step S3, the edges of the part are CNC-milled to remove machining process edges. In step S4, the A-side of the wood veneer layer 3 (the upper surface in Fig. 1) is sanded as a whole. In step S5, a paint layer 2 is applied to the A-side of the veneer layer 3 using a complete painting process. After painting, the wood grain pores of the veneer layer 3 are fully filled, and the surface achieves sufficient smoothness. In Step S6, metallic ink is pad-printed onto the A-side of the veneer layer 3, specifically over the paint layer 2, to create a metallic luster layer 1. This results in an appearance featuring a wood grain pattern with metallic accents.

Furthermore, in some embodiments, the conventional wood veneer layer may first be cut to the desired size and shape in step S0. Alternatively, a conventional wood veneer layer that has already been cut to the desired size and shape may be provided in step S0.

Alternatively, in some embodiments, the metallic luster layer 1 may be provided in step S6 by means of PVD coating.

Alternatively, in some embodiments, particularly when the wood veneer layer 3 is sufficiently smooth, the metallic luster layer 1 may be positioned between the paint layer 2 and the wood veneer layer 3. This allows the paint layer 2 to provide additional protection for the metallic luster layer 1.

### Embodiment 2

As shown in Figure 2, the real wood trim of this embodiment may be a high-end version with light transmission. The real wood trim with light transmission may have a luminous or light-transmitting effect.

Similar to Embodiment 1, this real wood trim comprises, from top to bottom, a metallic luster layer 1, a paint layer 2, a wood veneer layer 3, and a base layer 4. Unlike Embodiment 1, the base layer 4 comprises a plastic substrate layer 41 and a transparent plastic layer 42. The transparent plastic layer 42 may be positioned directly below the metallic luster layer 1 in the light-transmitting region. A bottom lighting element may be arranged below the real wood trim; this element emits light that passes through the transparent plastic layer 42 and the wood veneer layer 3, and is refracted by the metallic luster layer 1 to produce a translucent metallic effect. In the illustrated configuration, the transparent plastic layer 42 may be located within the plastic substrate layer 41.

In this embodiment, the metallic luster layer 1 may be a pad-printed ink layer, which is a semi-transparent layer. When the light is off, it displays a static metallic effect, concealing the internal structure; when the light is on, it illuminates the metallic effect.

In this embodiment, the wood veneer layer 3 is a light-transmitting wood veneer layer. A fully light-transmissive wood veneer layer provides a subtle, natural wood grain texture effect. A "light-transmissive wood veneer layer" may be understood as a wood veneer layer possessing a certain degree of light transmittance.

In this embodiment, the plastic substrate layer 41 acts as a shielding layer, while the transparent plastic layer 42 provides high light transmittance. To this end, the plastic substrate layer 41 may be opaque, for example, black.

Referring to Figure 8, the specific manufacturing method for the real wood trim of this embodiment may, for example, include: in step S1, hot-pressing the light-transmitting wood veneer layer as a whole into the desired irregular shape to produce the wood veneer layer 3. In step S2a, non-transparent plastic particles may be injection-molded as an insert for the first time onto the back of the wood veneer layer 3, particularly in the desired non-translucent areas, to provide a plastic substrate layer 41, thereby forming a shielding layer in the non-translucent areas. In step S2b, transparent plastic particles may be injection-molded as an insert a second time onto the back of the wood veneer layer 3 to provide a transparent plastic layer 42. Consequently, the transparent plastic layer 42 fills the back of the desired light-transmitting region and forms an integral base layer 4 with the plastic substrate layer 41. This results in a part comprising the wood veneer layer 3 and the base layer 4. It should be understood that steps S2a and S2b do not necessarily have to follow a specific order; therefore, step S2b may also be performed prior to step S2a. In step S3, the edges of the part are CNC-milled to remove machining process edges. In step S4, the A-side of the veneer layer 3 may be sanded uniformly. In step S5, a paint layer 2 may be applied using a complete painting process. After painting, the wood grain pores of the veneer layer 3 are fully filled, and the surface flatness is sufficient. In step S6, metallic ink is pad-printed onto the light-transmitting region of the A-side of the veneer layer 3 (specifically over the paint layer 2) to provide the metallic luster layer 1. Since the metallic luster layer 1 has a certain degree of transmittance, this creates an appearance where the wood grain is combined with a metallic, light-transmitting effect.

Here, light from the lighting element can pass sequentially through the wood veneer layer 3 and the metallic luster layer 1 to emerge. Therefore, when the lighting element is illuminated, not only a metallic effect but also a wood grain effect can be observed in the light-transmitting region.

It should be understood that, since pad printing ink imposes certain requirements on the surface flatness of the product, and to minimize the paint layer 2's obstruction of the ink's metallic texture, this embodiment positions the pad-printed ink layer above the paint layer 2.

In some embodiments, it is also feasible to position the metallic luster layer 1 between the paint layer 2 and the wood veneer layer 3. This applies, for example, when the wood veneer layer 3 is sufficiently smooth and the paint layer 2 is transparent.

In some embodiments, the metallic luster layer 1 may be provided in step S6 by means of PVD coating.

Furthermore, in some embodiments, the translucent wood veneer layer may first be cut to the desired size and shape in step S0. Alternatively, a translucent wood veneer layer that has already been cut to the desired size and shape may be provided in step S0.

### Embodiment 3

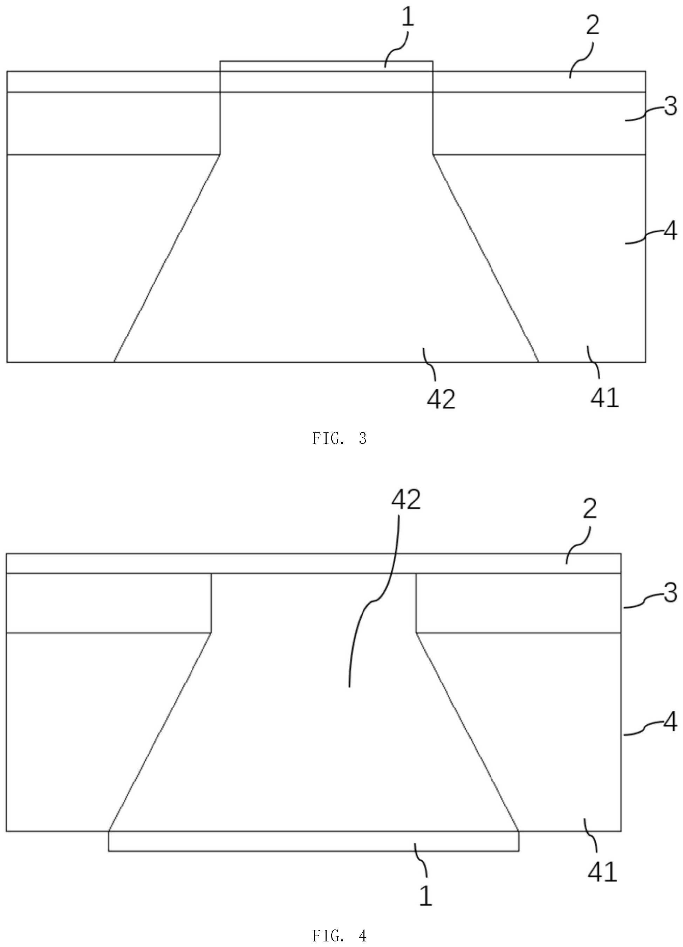

As shown in Figure 3, the real wood trim of this embodiment may be a high-end version with light transmission. Similar to embodiment 2, this real wood trim may sequentially include, from top to bottom, a metallic luster layer 1, a paint layer 2, a wood veneer layer 3, and a base layer 4. Unlike embodiment 2, the wood veneer layer 3 forms an openwork structure in the light-transmitting region.

In this embodiment, the metallic luster layer 1 may be a PVD coating layer capable of producing various metallic appearance effects. The metallic luster layer 1 may also be a pad-printed ink layer.

In this embodiment, the wood veneer layer 3 may be a conventional wood veneer layer.

Referring to Figure 9, the specific manufacturing method of the real wood decorative trim of this embodiment may, for example, include: in step S1, hot-pressing the conventional wood veneer layer as a whole to form the desired irregular shape, thereby providing the wood veneer layer 3. In step S2a, non-transparent plastic particles may be injection-molded as an insert into the back of the wood veneer layer 3-specifically in the desired non-translucent areas-to form a plastic substrate layer 41, thereby creating a shielding layer in the non-translucent areas. In step S7, the wood veneer layer 3 may be laser-engraved in the translucent areas to remove the material in the desired patterns. In step S2b, transparent plastic particles may be injection-molded onto the back of the wood veneer layer 3 to form a transparent plastic layer 42. Consequently, the transparent plastic layer 42 fills the back of the desired light-transmitting region and forms an integral base layer 4 with the plastic substrate layer 41. This results in a part composed of the wood veneer layer 3 and the base layer 4. In step S3, the edges of the part are CNC-milled to remove machining process edges. In step S4, the A-side of the wood veneer layer 3 may be sanded uniformly. In step S5, a paint layer 2 may be applied by spraying. Finally, in step S6 (specifically over the paint layer 2), PVD coating may be applied to the A-side of the wood veneer layer 3 to provide a metallic luster layer 1. Since the metallic luster layer 1 has a certain degree of transmittance, this creates an appearance where the wood grain is combined with a metallic, translucent effect.

Here, since the wood veneer layer 3 is hollowed-out in the light-transmitting region, light from a lighting element can be transmitted exclusively through the metallic luster layer 1. Therefore, when the lighting element is illuminated, only a light-transmitting metallic effect is displayed in the light-transmitting region.

In some embodiments, particularly when the wood veneer layer 3 is a translucent wood veneer layer, the wood veneer layer 3 may be only partially hollowed-out in the light-transmitting region. Consequently, when the lighting element is illuminated, the non-hollowed-out region of the wood veneer layer 3 in the light-transmitting region may display a translucent wood grain and metallic overlay effect similar to that of embodiment 2, while the hollowed-out region of the wood veneer layer 3 may display only the light-transmitting metallic effect.

In some embodiments, the metallic luster layer 1 may be provided in step S6 by pad printing using metallic ink.

Furthermore, in some embodiments, the wood veneer layer may first be cut to the desired size and shape in step S0. Alternatively, a wood veneer layer that has already been cut to the desired size and shape may be provided in step S0.

### Embodiment 4

As shown in Figure 4, the real wood trim according to this embodiment may be a high-end version with light transmission. The only difference from embodiment 3 is that the metallic luster layer 1 is located below the transparent plastic layer 42. Compared to embodiment 3, embodiment 4 can prevent the metallic luster layer 1 from being scratched. It should be understood that the trapezoidal design of the transparent plastic layer 42 increases the bonding area between the plastic substrate layer 41 and the transparent plastic layer 42, thereby enhancing the bond strength of the overmolding process.

In some embodiments, the wood veneer layer 3 may be only partially hollowed-out in the light-transmitting region. Consequently, when the lighting elements are illuminated, the hollowed-out region of the wood veneer layer 3 in the light-transmitting region may display only a light-transmitting metallic effect, while the non-hollowed-out region of the wood veneer layer 3 may retain a substantially non-translucent wood grain effect. In other embodiments, if the wood veneer layer 3 is a translucent wood veneer layer, then when the lighting element is illuminated, the non-hollowed-out regions of the wood veneer layer 3 within the translucent area may display a translucent wood grain effect.

The various steps of the manufacturing method for the real wood trim shown in Figure 4 may be illustrated, for example, with reference to Figure 9. Since the metallic luster layer 1 is located below the transparent plastic layer 42 in this case, step S6 for providing the metallic luster layer 1 need not be performed after step S5 for providing the paint layer 2, provided that step S6 follows step S2b for providing the transparent plastic layer 42.

### Embodiment 5

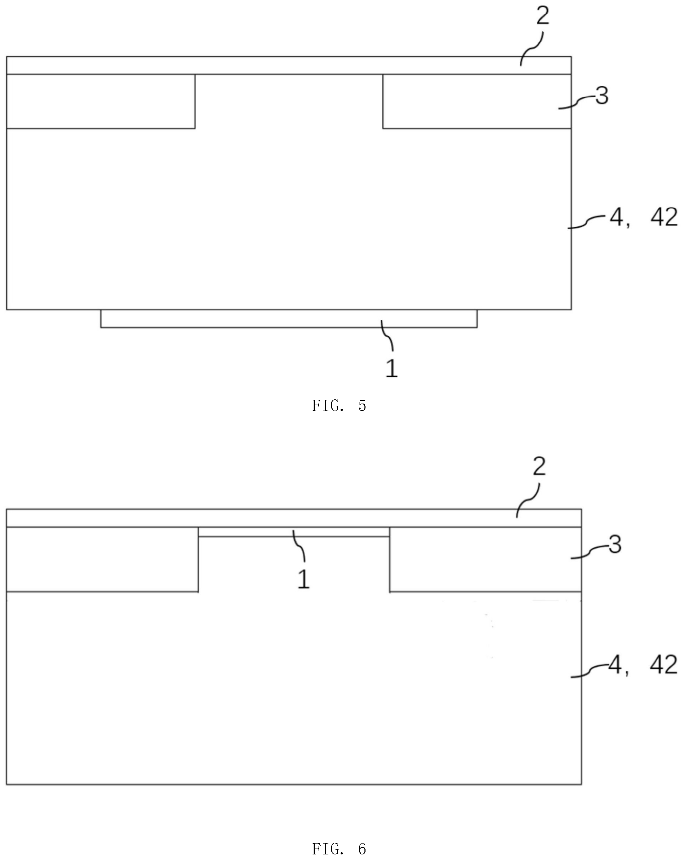

As shown in Figure 5, the real wood decorative trim according to this embodiment may be a high-end version with light transmission. The only difference from embodiment 4 is that the plastic substrate layer 41 in the non-light-transmitting region is replaced with a transparent plastic layer 42 to provide a fully light-transmitting base layer 4, while the wood veneer layer 3 requires additional light-shielding. Thus, the specific manufacturing method for the real wood trim of this embodiment can essentially follow the manufacturing method described in conjunction with embodiment 4; however, here it is only necessary to perform a single insert molding of transparent plastic particles on the back side of the wood veneer layer 3 to provide the base layer 4. Consequently, step S2a of providing the plastic substrate layer 41 shown in Figure 9 can be omitted, and the integral transparent plastic layer 42 is provided in step S2b as the integral light-transmitting base layer 4. The metallic luster layer 1 is located below the transparent base layer 4, allowing the metallic luster to be seen through the paint layer 2 and the base layer 4. In embodiment 5, the light-shielding effect of embodiment 4 can be achieved by adding light-shielding properties to the wood veneer layer 3. Compared to embodiment 4, single-color injection molding can be used instead of two-color injection molding when providing the base layer 4, resulting in lower costs.

### Embodiment 6

As shown in Figure 6, the real wood trim according to this embodiment may be a high-end version with light transmission. Differences from embodiment 5 include the fact that the metallic luster layer 1 is located directly below the paint layer 2. Thus, for example, with reference to Figure 10, the specific manufacturing method for the real wood decorative part of this embodiment may involve, for example, performing pad printing on surface A or applying a PVD coating to provide the metallic luster layer 1 (Step S6) after CNC milling (Step S3), followed by an overall spray painting process to provide the paint layer 2 (Step S5).

It should be understood that the veneer layer 3 mentioned above may include a veneer, an adhesive layer, and a base layer, with non-woven fabric typically serving as the base layer for the veneer layer 3. The light-shielding performance of both the wood veneer and the base layer in an untreated wood veneer layer is generally poor. If the base layer 4 is provided as a transparent plastic layer, as in Embodiment 6, the light-shielding performance of the wood veneer layer can be correspondingly improved. One approach is to optimize the wood veneer layer for light blocking, such as by adding a light-shielding layer. To this end, a light-shielding material may be coated on the back side of the wood veneer layer 3 or a light-shielding layer may be applied.

It should be understood that, although the various method steps are referred to as S0 to S7 in the description and drawings, this should not be construed as limiting the order of the corresponding method steps.

It should be noted that the terminology used herein is intended solely for the purpose of illustrating specific aspects and is not intended to limit the disclosure. The singular forms "a" and "the" used herein shall include the plural forms unless the context expressly indicates otherwise. It is understood that the terms "comprises" and "comprising," as well as other similar terms, when used in the application, specifically describe the presence of the stated operations, elements, and/or components, without excluding the presence or addition of one or more other operations, elements, components, and/or combinations thereof. The term "and/or" as used herein comprises any combination of one or more of the items listed in connection therewith. In the description of the drawings, similar reference numerals always denote similar elements.

The thickness of the elements in the drawings may be exaggerated for clarity. Furthermore, it should be understood that if an element is described as being on, coupled to, or connected to another element, the former may be formed directly on, coupled to, or connected to the latter, or there may be one or more intermediate elements between them. Conversely, if the expressions "directly on ...," "directly coupled to ...," and "directly connected to ..." are used herein, this indicates that there are no intermediate elements. Other terms used to describe the relationship between elements should be interpreted similarly, such as "between ..." and "directly between ...," "attached" and "directly attached," "adjacent" and "directly adjacent," and so on.

Here, terms such as "top," "bottom," "above," "below," "on top," "on the bottom," and so on are used to describe the relationship of an element, layer, or region relative to another element, layer, or region, as shown in the drawings. It is understood that, in addition to the orientations described in the drawings, these terms should also encompass other orientations of the device.

It should be understood that although terms such as "first," "second," and the like may be used herein to identify different elements, such elements are not limited by these terms. These terms are used merely to distinguish one element from another. Therefore, a first element may be referred to as a second element without departing from the teachings of the present invention.

It should also be noted that all exemplary embodiments disclosed herein may be combined with one another in any manner.

The above description relates only to preferred embodiments of the present application and is not intended to limit the scope of the present application; various modifications may be made to the embodiments described herein. That is, any simple, equivalent changes and modifications made in accordance with the content of the claims and the description of the present application fall within the scope of protection of the claims of the present patent. Anything not described in detail herein constitutes prior art.

## Claims

1. A real wood trim,
**characterized in that**
the real wood trim comprises, arranged from bottom to top, a base layer, a wood veneer layer, and a paint layer, wherein the real wood trim further comprises a metallic luster layer, wherein the metallic luster layer is a pad-printed ink layer or a PVD coating layer.

2. The real wood trim according to claim 1,
**characterized in that**
the pad-printed ink layer is located above the paint layer.

3. The real wood trim according to claim 1 or 2,
**characterized in that**
the base layer comprises an opaque plastic substrate layer and/or a transparent plastic layer.

4. The real wood trim according to claim 3,
**characterized in that**
when the base layer is an opaque plastic substrate layer, the metallic luster layer is located above the base layer.

5. The real wood trim according to claim 3 or 4,
**characterized in that**
when the base layer comprises a transparent plastic layer, the metallic luster layer is located above or below the base layer; wherein in particular, the metallic luster layer is at least partially located in a region corresponding to the transparent plastic layer.

6. The real wood trim according to any one of claims 1 to 5,
**characterized in that**
the wood veneer layer comprises a shielding layer.

7. The real wood trim according to any one of claims 3 to 6,
**characterized in that**
when the base layer comprises the opaque plastic substrate layer and the transparent plastic layer, the metallic luster layer is located above or below the transparent plastic layer.

8. The real wood trim according to claim 7,
**characterized in that**
the transparent plastic layer is located inside the plastic substrate layer in a light-transmitting region.

9. The real wood trim according to any one of claims 1 to 8,
**characterized in that**
the wood veneer layer is a conventional wood veneer layer or a translucent wood veneer layer.

10. The real wood trim according to claim 9,
**characterized in that**
when the wood veneer layer is an opaque conventional wood veneer layer, the metallic luster layer is located above the conventional wood veneer layer, or the conventional wood veneer layer has a hollowed-out structure in a light-transmitting region.

11. A method for manufacturing a real wood trim according to any one of claims 1 to 10,
**characterized in that**
the method comprises:
- providing a base layer on the back of a wood veneer layer;
- providing a paint layer on the upper surface of the wood veneer layer;
and
- providing a metallic luster layer by means of pad printing or PVD coating.

12. The method according to claim 11,
**characterized in that**
the method comprises:
- performing a first insert molding on the back of a wood veneer layer to provide a plastic substrate layer; and
- performing a second insert molding on the back of the wood veneer layer to provide a transparent plastic layer.

13. The method according to claim 12,
**characterized in that:**
- the first insert molding is performed using non-transparent plastic particles; and/or
- the second insert molding is performed using transparent plastic particles.

14. The method according to any one of claims 11 to 13,
**characterized in that**
the method comprises:
- hot-pressing the wood veneer layer as a whole into the desired shape prior to providing the base layer.

15. The method according to any one of claims 11 to 14,
**characterized in that**
the method comprises:
- laser engraving the wood veneer layer.

16. The method according to any one of claims 11 to 15,
**characterized in that**
the method comprises:
- CNC milling edges of the part after providing the base layer to remove process edges.

17. The method according to any one of claims 11 to 16,
**characterized in that**
the method comprises:
- sanding the upper surface of the wood veneer layer prior to applying the paint layer.

18. The method according to any one of claims 11 to 17,
**characterized in that**
the method comprises:
- cutting the wood veneer layer; and/or
- and/or subjecting the wood veneer layer to a light-shielding treatment.
